(19) Europäisches Patentamt
European Patent Office
Office européen des brevets

(11) **EP 2 274 133 B1**

(12) **EUROPÄISCHE PATENTSCHRIFT**

(45) Veröffentlichungstag und Bekanntmachung des Hinweises auf die Patenterteilung:
**25.12.2013 Patentblatt 2013/52**

(21) Anmeldenummer: **09727538.2**

(22) Anmeldetag: **31.03.2009**

(51) Int Cl.:
**B23Q 11/00** (2006.01)    **F16D 59/02** (2006.01)

(86) Internationale Anmeldenummer:
**PCT/EP2009/053768**

(87) Internationale Veröffentlichungsnummer:
**WO 2009/121855 (08.10.2009 Gazette 2009/41)**

(54) **SCHUTZSYSTEM FÜR WERKZEUGMASCHINEN**

PROTECTIVE SYSTEM FOR MACHINE TOOLS

SYSTÈME DE PROTECTION POUR MACHINES-OUTILS

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **31.03.2008 DE 102008000891**

(43) Veröffentlichungstag der Anmeldung:
**19.01.2011 Patentblatt 2011/03**

(73) Patentinhaber: **Robert Bosch GmbH**
**70442 Stuttgart (DE)**

(72) Erfinder: **Winkler, Thomas**
**07589 Lindenkreuz (DE)**

(56) Entgegenhaltungen:
**DE-A1- 2 147 669    DE-A1- 19 536 995**
**DE-U1- 8 708 955    US-A- 4 531 617**
**US-A- 5 105 925**

EP 2 274 133 B1

## Beschreibung

Stand der Technik

Die vorliegende Erfindung betrifft eine Werkzeugmaschine mit einem Notbremssystem, insbesondere eine Kreissäge, wobei das Notbremssystem seine Schutzwirkung innerhalb einer sehr geringen Zeitspanne, die gewöhnlich im Bereich einiger Millisekunden liegt, entfaltet, um einen Benutzer der Werkzeugmaschine in Gefahrensituationen vor Verletzungen zu schützen.

Derzeit existieren im Wesentlichen drei verschiedene Ansätze zur Realisierung eines solchen Schutzsystems für Tisch- und Format-Kreissägen, das verhindern soll, dass ein Benutzer mit dem umlaufenden Sägeblatt in Kontakt kommt oder eine folgenschwere Schnittverletzung davonträgt.

Bei dem unter dem Firmennamen Saw Stop Inc. geführten und vertriebenen Schutzsystem eines amerikanischen Herstellers handelt es sich um ein Notbremssystem, das ein Abbremsen der Werkzeugmaschine aufgrund eines direkten Eingriffes einer Brems-Aktorik mit dem Sägeblatt ermöglicht, sobald ein entsprechend gestalteter Sensor eine Gefahrensituation detektiert hat. Hierbei wird durch den Einsatz eines Hitzdrahtauslösers ein drehbar angeordneter Aluminiumblock mit Hilfe einer vorgespannten Feder in die Verzahnung des laufenden Sägeblattes gestoßen, welcher sich darin verkeilt und auf diese Weise die Rotationsenergie aller während des Sägevorgangs umlaufenden Geometrien der Werkzeugmaschine absorbiert. Als Nebeneffekt wird dieser einseitige Kraftangriff auf die Schneiden dazu genutzt, das Sägeblatt durch eine konstruktiv speziell ausgeführte Aufhängung, die am Sägetisch angeordnet ist, in den Sägetisch zu versenken. Mit Hilfe dieser Anordnung ist man dazu in der Lage, folgenschwere körperliche Schäden von dem den Schutzmechanismus auslösenden Bediener der Werkzeugmaschine abzuwenden. Nachteilig ist hierbei der direkte Angriff auf das Bearbeitungswerkzeug, also auf die Schneidengeometrie des Sägeblattes, da durch Ausbrechen von Teilen der Verzahnung zusätzliches Gefahrenpotential für den Bediener entsteht. Des Weiteren ist zur Wiederherstellung der Bereitschaft des Schutzsystems ein Austausch der Bremseinheit inklusive des Sägeblattes durch eine einsatzbereite Ersatzeinheit erforderlich, die der Bediener bevorraten muss, um nach erfolgtem Bremsvorgang unter Inanspruchnahme der Schutzfunktion weiterarbeiten zu können. Dies ist mit erheblichen Folgekosten und entsprechendem Zeitaufwand für die Beschaffung und Installierung verbunden. Zudem kann davon ausgegangen werden, dass alle vom Bremsvorgang betroffenen Bauteile, d.h. alle umlaufenden Geometrien der Werkzeugmaschine, starken Beanspruchungen während der Verzögerungsphase ausgesetzt werden. Weder der Hersteller noch entsprechende Veröffentlichungen zu diesem System weisen Daten bezüglich der Dauerfestigkeit der Anlage aus.

Ein weiterer Ansatz verfolgt die Verwendung eines Schutzsystems zur ausschließlichen Absenkung des Sägeblattes im Sägetisch, ohne einen Bremsvorgang des Sägeblattes einzuleiten. Mit Hilfe eines pyrotechnischen Zündsatzes wird hierbei das Sägeblatt inklusive der Hauptwelle und deren Lagerung aus der Gefahrenzone entfernt, so dass schwerwiegende Verletzungen des Bedieners verhindert werden können. Nachteilig an dieser Schutzsystemart ist die Notwendigkeit der Bewegung relativ großer Massen in Form der abzusenkenden Anordnungen unter strengen Zeitvorgaben im Millisekundenbereich. Die hierdurch notwendigen pyrotechnischen Zünder, welche sich für diese Schutz-Aktorik als unerlässlich erweisen, rufen ferner eine teure Teilreversibilität hervor, welche ein sofortiges Weiterarbeiten an der Werkzeugmaschine mit einem einsatzbereiten Schutzsystem sowohl zeitlich als auch organisatorisch einschränken. Weiterhin eignet sich dieses Schutzsystem aus Gründen begrenzten Bauraumes und sehr spezifischer Verfahrensweise nur für größere stationäre Geräte, wie beispielsweise Tischkreissägen, die einen solchen Aufbau in ihrem Innern ermöglichen. Für die Anwendung an kleineren handgeführten Geräten, wie beispielsweise Kapp- und Gehrungssägen oder Paneelsägen, scheidet dieses System hingegen aus.

Eine Offenlegung aus einem öffentlich geförderten Projekt namens "Cut-Stop" (VDI/VDE/IT) zu einem Schutzsystem für Formatkreissägen vom Institut für Werkzeugmaschinen (IFW) der Universität Stuttgart beschreibt einen Ansatz, welcher mittels einer Sonderform einer Scheibenbremsanlage, nämlich einer selbstverstärkenden Keilbremse, die Hauptwelle der Werkzeugmaschine und somit das Sägeblatt zum Stillstand bringt. Hierbei wird mit Hilfe eines pyrotechnischen Zünders ein Keil beschleunigt und anschließend zwischen eine feststehende Keilführung in Form eines modifizierten Bremssattels und die rotierende Bremsscheibe gestoßen. Für die Auswahl und Kombination spezifischer Keilwinkel $\alpha$ und Bremsbelagwerte $\mu$ wirkt die Anordnung selbsthemmend, so dass mit diesem Aufbau in Abhängigkeit der zu verzögernden Massenträgheit die jeweiligen zeitlichen Anforderungen an dem Bremsvorgang erfüllt werden können. Der Nachteil dieses Schutzsystems liegt jedoch darin, dass auch hierbei, wie es in der genannten Veröffentlichung beschrieben wird, im Anschluss an die Auslösung der Schutz-Aktorik ein Austausch der kompletten Bremseinheit aufgrund des sich in der Reibpaarung verklemmenden Keils erforderlich ist. Der benötigte zeitliche Aufwand des durchzuführenden Arbeitsumfangs beläuft sich hierbei auf ca. 10-12 Minuten für die vollständige Wiederherstellung der Systembereitschaft. Somit gilt auch hier eine teilweise Einschränkung der unverzüglichen Systemreversibilität.

Aus der DE 195 36 995 A1 ist eine Sicherheitsbremse für Aufzüge bekannt, die eine Einrichtung aufweist, die bei Überschreiten einer vorgegebenen Höchstgeschwindigkeit des Transportmittels den Antrieb mit einer geschwindigkeitsabhängigen Verzögerung abbremst Und ggfls. auch anhält. Die Sicherheitsbremse der DE 195 36 995 A1 wirkt drehzahlabhängig unmittelbar auf die Treibscheibe der seilbetriebenen Förderanlage und vermag deren Drehgeschwindigkeit zu begrenzen. Die als Fliehkraftbremse ausgebildete Sicherheitsbremse weist zusätzlich eine Einrichtung zum Verstärken der Bremskraft in Abhängigkeit von der Fördergeschwindigkeit auf.

Ausgehend von diesem Stand der Technik ist es eine Aufgabe der vorliegenden Erfindung, eine Werkzeugmaschine mit Notbremssystem mit alternativem Aufbau zu schaffen, das seine Schutzwirkung innerhalb einiger Millisekunden entfaltet und die eingangs beschriebenen Probleme zumindest teilweise behebt.

Offenbarung der Erfindung

Zur Lösung dieser Aufgabe schafft die vorliegende Erfindung eine Werkzeugmaschine mit einem Notbremssystem zum abrupten Abbremsen einer umlaufenden Welle, wobei das Notbremssystem eine Bremstrommel und zumindest eine Bremsbacke aufweist, die zum Abbremsen der Welle miteinander in Eingriff gebracht werden. Erfindungsgemäß sind die Bremstrommel und die zumindest eine Bremsbacke derart ausgebildet und angeordnet, dass der Bremseingriff zwischen der Bremstrommel und der Bremsbacke unter dem Einfluss der aus der Rotation der Welle resultierenden Fliehkraft bzw. Fliehbeschleunigung erfolgt. Erfindungsgemäß ist das Bremssystem dabei selbstverstärkend, insbesondere selbsthemmend ausgebildet.

In Abhängigkeit der geometrischen Abmessungen der Konstruktion des Bremssystems definiert sich dessen Verstärkungsfaktor C*, wobei dieser für den vorliegenden Aufbau im Bereich der Selbstverstärkung oder der Selbsthemmung des Systems liegt. Für diesen Fall der Selbstverstärkung oder der Selbsthemmung des Bremssystems wird vorteilhaft nur ein kurzer Impuls zur Bildung der Reibpaarung benötigt, da die Bremsbacken infolge des auftretenden Kräftegleichgewichts an die Bremstrommel gepresst werden.

Dies ermöglicht in vorteilhafter Weise Bremszeiten, die nochmals deutlich unter denen einer nur die die Fliehkraft getriebenen Bremse liegen.

Die vorliegende Erfindung ist demnach darauf ausgerichtet, die Verzögerung der umlaufenden Welle der Werkzeugmaschine, bei der es sich beispielsweise um eine Tischkreissäge, um eine Kapp- und Gehrungssäge oder um eine Paneelsäge handeln kann, durch die Nutzung der vorhandenen Rotationsenergie der umlaufenden Welle mit Hilfe des Aufbaus einer selbstverstärkenden oder selbsthemmenden Reibpaarung zu realisieren. Auf diese Weise kann der vorgegebene Zeitrahmen der Abbremsung, der im Bereich einiger Millisekunden liegt, gewährleistet werden. Die erfindungsgemäße Ausgestaltung der Bremse erlaubt die Abbremsung eines von einer Welle direkt oder indirekt angetriebenen Werkzeuges in sehr kurzen Zeiten, die typischerweise im Bereich von 1 bis 50 ms, vorteilhafterweise im Bereich von 1 bis 20 ms und insbesondere im Bereich von 10ms und weniger liegen. Vorteilhafterweise wird bei der Abbremsung der Werkzeugmaschine nicht direkt in das Werkzeug eingegriffen. Ein solcher Eingriff würde unweigerlich mit der Zerstörung des Werkzeuges einhergehen. Die erfindungsgemäße Werkzeugmaschine bremst die das Werkzeug direkt oder indirekt antreibende Welle ab. Auf diese Weise bleibt das Werkzeug selbst unbeschädigt.

Dabei sollte klar sein, dass die Auslösung des Abbremsvorgangs, die beispielsweise als Antwort auf ein Ausgangssignal eines Sensors erfolgt, der eine Gefahrensituation für den Benutzer detektiert, mechanisch, elektromechanisch, pyrotechnisch, pneumatisch oder hydraulisch erfolgen kann und prinzipiell an kein bestimmtes Medium gebunden ist, wobei jedoch eine elektromechanische Auslösung aufgrund eines einfachen Aufbaus und einer sehr guten Reversibilität bevorzugt wird.

Gemäß einer Ausgestaltung der vorliegenden Erfindung ist die zumindest eine Bremsbacke schwenkbar an einem Bremsbackenträger befestigt, der an der umlaufenden Welle angeordnet ist und mit dieser umläuft. Bevorzugt ist eine Verriegelungseinrichtung vorgesehen, die zwischen einer verriegelten Stellung, in der die Bremsbacke an dem Bremsbackenträger gehalten wird, und einer entriegelten Stellung verstellbar ist, in der die zumindest eine Bremsbacke derart freigegeben wird, dass diese eine Schwenkbewegung in Richtung der Bremstrommel ausführt, um den Bremseingriff zu erzeugen. Mit anderen Worten wird die mit der umlaufenden Welle rotierende zumindest eine Bremsbacke unter Ausnutzung der Fliehkraft der umlaufenden Welle abrupt innerhalb weniger Millisekunden in Richtung der ortsfesten Bremstrommel bewegt, sobald die Verriegelungseinrichtung in ihre entriegelte Stellung überführt wird.

Die Verriegelungseinrichtung umfasst bevorzugt zumindest ein Sperrelement, das zwischen einer verriegelten Stellung, in der es mit der zumindest einen Bremsbacke in Eingriff ist, und einer entriegelten Stellung bewegbar ist, in der es von der Bremsbacke entkoppelt ist. Ein solches Sperrelement kann beispielsweise als Sperrbolzen oder dergleichen ausgebildet sein.

Die Verriegelungseinrichtung umfasst vorteilhaft einen Aktuator, der die Verriegelungseinrichtung aus der verriegelten Stellung in die entriegelte Stellung überführt. Bei diesem Aktuator kann es sich beispielsweise um einen Magnet-Aktuator handeln, der einen Ringanker zieht, an welchem ein Sperrelement in Form eines Sperrbolzens befestigt ist, um den Sperrbolzen aus der Bremsbacke auszurücken, so dass diese freigegeben wird.

Das Notbremssystem umfasst zudem bevorzugt eine Kopplungseinrichtung, die derart beschaffen ist, dass sie in ihrer gekoppelten Stellung die abzubremsende Welle mit einem Antriebsstrang verbindet, und dass sie während einer Notbremsung automatisch in ihre entkoppelte Stellung überführt wird, in der die abzubremsende Antriebswelle von dem Antriebsstrang entkoppelt ist. Eine derartige Entkopplung des Antriebsstrangs während eines Notbremsvorgangs stellt sicher, dass der Antriebsstrang, der beispielsweise eine Antriebswelle und etwaige Übersetzungsstufen aufweisen kann, von dem eigentlichen Bremsvorgang ausgeklammert wird, wodurch der Antriebsstrang den während des Bremsvorgangs auftretenden großen Verzögerungsmomenten nicht ausgesetzt ist. Dies bringt zum einen den Vorteil, dass Komponenten des Antriebsstranges aufgrund des Bremsvorgangs nicht beschädigt werden können. Zum anderen müssen die Geometrien der antriebsseitigen Komponenten konstruktiv nicht an die Erfordernisse des Bremsvorgangs angepasst werden, weshalb sie weniger robust und preiswerter produziert werden können. Zusätzlich ergibt sich hierdurch eine nutzbringende Verringerung des zu verzögernden Massenträgheitsmomentes, da die Komponenten des Antriebsstranges nicht abgebremst werden müssen. Somit kann die Systemlast während der Verzögerungsphase entscheidend vermindert werden. Entsprechend kann die für den Abbremsvorgang des Sägeblattes erforderliche Zeitdauer bei gleicher Krafteinwirkung wesentlich verkürzt werden. Alternativ kann natürlich auch die Krafteinwirkung bei unveränderter Abbremszeitdauer verringert werden.

Gemäß einer bevorzugten Ausgestaltung ist die abzubremsende Welle als Hohlwelle ausgebildet, in deren Hohlraum eine Antriebswelle des Antriebsstranges positioniert ist. Die Kopplungseinrichtung ist dabei vorteilhaft durch einen an der zumindest einen Bremsbacke vorgesehenen Vorsprung gebildet, der in der gekoppelten Stellung durch eine in der abzubremsenden Welle vorgesehene Durchgangsöffnung in eine Aussparung der Antriebswelle greift, so dass die Antriebswelle und die abzubremsende Welle drehfest miteinander verbunden sind, und der in der entkoppelten Stellung aus dem Eingriff mit der Aussparung der Antriebswelle kommt, so dass die abzubremsende Welle nicht länger von der Antriebswelle angetrieben wird. Auf diese Weise kann eine Entkopplung des Antriebsstranges während des Abbremsvorgangs realisiert werden. Bevorzugt ist der Vorsprung mit der Aussparung formschlüssig in Eingriff, wodurch ein sicherer Eingriff des Vorsprungs in der Aussparung erzielt wird. Hierzu kann der Vorsprung beispielsweise bogenförmig und die Aussparung prismaförmig ausgebildet sein.

An dieser Stelle sei darauf hingewiesen, dass die Anzahl der Vorsprünge nicht der Anzahl der Aussparungen entsprechen muss. So können beispielsweise vier Aussparungen und lediglich zwei Vorsprünge vorgesehen sein. Dies ist dahingehend von Vorteil, dass die Antriebswelle nach einem Auslösen des Notbremssystems nur geringfügig gedreht werden muss, um die Vorsprünge wieder in einem Paar von Aussparungen anzuordnen. Auch können mehr als zwei Bremsbacken vorgesehen werden, von denen jedoch nur zwei über entsprechende aus einem Vorsprung und einer Aussparung gebildete Verbindungen an der Antriebswelle festgelegt werden müssen.

Zudem weist das Notbremssystem bevorzugt eine Rückstelleinrichtung zum Zurückbewegen der zumindest einen Bremsbacke in ihre Ausgangslage auf, um eine vollständige Systemreversibilität nach erfolgtem Abbremsvorgang zu gewährleisten. Die Rückstelleinrichtung ist dabei in enger Abstimmung mit der Selbstverstärkung der Reibpaarung und damit mit der Geometrie des Bremssystems ausgelegt. Die Rückstelleinrichtung kann beispielsweise sowohl durch den Einsatz von entsprechend dimensionierten Zug- als auch Druckfederelementen realisiert werden.

Die vorliegende Erfindung bezieht sich auf eine Werkzeugmaschine mit einem Notbremssystem der zuvor beschriebenen Art, wobei es sich bei der Werkzeugmaschine bevorzugt um eine Kreissäge handelt, genauer gesagt um eine Tischkreissäge, eine Kapp- und Gehrungssäge oder eine Paneelsäge.

Es sollte jedoch klar sein, dass das erfindungsgemäße Bremssystem auch auf andere Werkzeugmaschinen anwendbar ist, welche aus spezifischem Anlass auf eine gezielt auslösbare Verzögerung unter gegebenem Zeitrahmen im Bereich weniger Millisekunden angewiesen sind. Eine Anpassung dieser Erfindung an eine andere Werkzeugmaschine ist im Einzelfall also prinzipiell möglich.

Ausführungsbeispiel

Nachfolgend werden beispielhafte Ausführungsformen der vorliegenden Erfindung unter Bezugnahme auf die beiliegenden Zeichnungen genauer beschrieben. Die Beschreibung, die zugehörigen Figuren sowie die Ansprüche enthalten zahlreiche Merkmale in Kombination. Ein Fachmann wird diese Merkmale, insbesondere auch die Merkmale verschiedener Ausführungsbeispiele, auch einzeln betrachten und zu sinnvollen, weiteren Kombinationen zusammenfassen.

Fig. 1      eine schematische Vorderansicht eines Notbremssystems gemäß einer Ausführungsform der vorliegenden Erfindung in einem Zustand, in dem der Bremsvorgang nicht ausgelöst wurde;

Fig. 2      eine schematische Vorderansicht des in Fig. 1 dargestellten Notbremssystems in einem Zustand, in dem der Abbremsvorgang ausgelöst wurde;

Fig. 3      eine Längsschnittansicht des in den Fig. 1 und 2 dargestellten Notbremssystems in einem Zustand, in dem der Bremsvorgang nicht ausgelöst wurde;

Fig. 4      eine schematische Längsschnittansicht des in den Fig. 1 bis 3 dargestellten Notbremssystems in einem Zustand, in dem der Bremsvorgang ausgelöst wurde;

Fig. 5    eine schematische Querschnittansicht des in den Fig. 1 bis 4 dargestellten Notbremssystems in einem Zustand, in dem der Bremsvorgang nicht ausgelöst wurde; und

Fig. 6    eine schematische Querschnittansicht des in den Fig. 1 bis 5 dargestellten Notbremssystems in einem Zustand, in dem der Bremsvorgang ausgelöst wurde;

Fig. 7    eine schematische Darstellung eines Modells zur Selbstverstärkung der Bremswirkung;

Fig. 8    ein Detailauszug der schematischen Darstellung gemäß Figur 7 zur Verdeutlichung der wirkenden Kräfte;

Fig. 9    ein graphischer Überblick zu Anfangsgeschwindigkeiten verschiedener Massepunkt der Bremsbacke des Bremssystems;

Fig. 10    eine schematische Darstellung des Bremssystems zur Verdeutlichung der Reibcharakteristik der Fliehkraftbremse;

Fig.11    ein Ausführungsbeispiel einer Werkzeugmaschine in Form einer Tischkreissäge

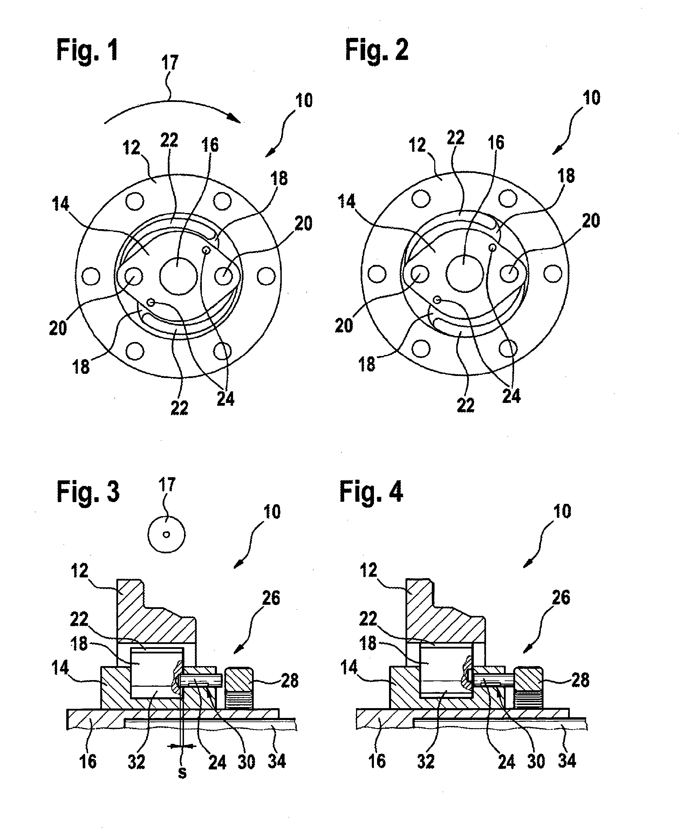

Mit den Figuren 1 bis 6 wird der prinzipielle Aufbau des Notbremssystems erläutert.

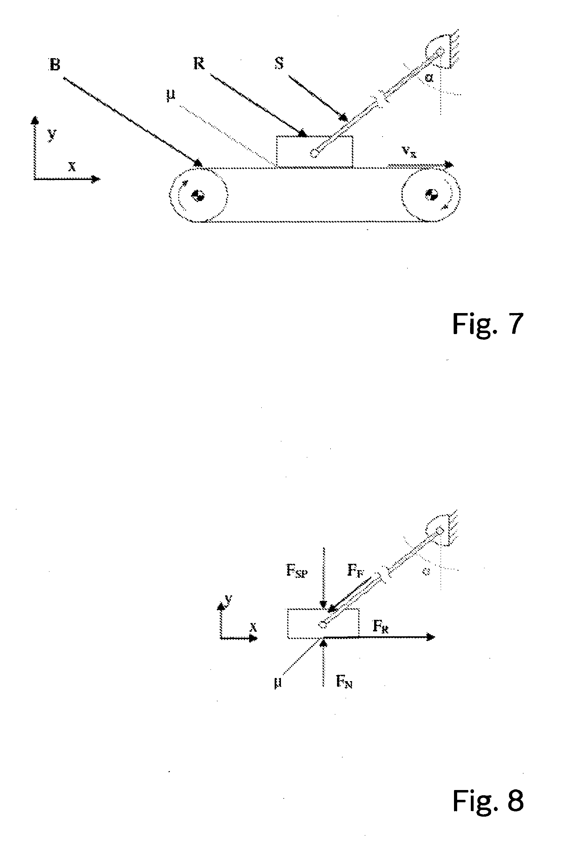

Die Figuren 7 bis 10 dienen der Darstellung der selbstverstärkenden Eigenschaft des Notbremssystems.

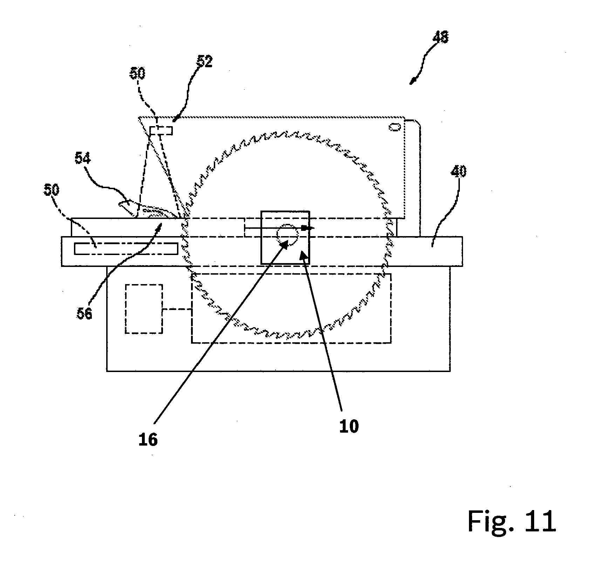

Figur 11 zeigt eine Werkzeugmaschine in Form einer Tischkreissäge mit einem solchen Notbremssystem.

Die Fig. 1 bis 6 zeigen schematische Ansichten eines Notbremssystems gemäß einer Ausführungsform der vorliegenden Erfindung, das allgemein mit der Bezugsziffer 10 bezeichnet ist und dazu dient, beispielweise ein Sägeblatt einer Tischkreissäge (hier nicht gezeigt, siehe vielmehr Figur 11) in einer Gefahrensituation innerhalb eines sehr kurzen Zeitraums, der im Bereich weniger Millisekunden liegt, zum Stillstand zu bringen. Das Notbremssystem 10 umfasst eine feststehende Bremstrommel 12, die an einem nicht näher dargestellten Rahmenbauteil der Tischkreissäge befestigt ist. Dieses Rahmenbauteil muss konstruktiv derart ausgelegt sein, dass es den während der Verzögerungsphase entstehenden Bremsmomenten standhält und diese aufnehmen kann. Ferner umfasst das Notbremssystem 10 einen Bremsbackenträger 14, der fest mit einer sägeblattseitigen Abtriebswelle 16 verbunden ist, so dass er mit dieser in der mit dem Pfeil 17 gekennzeichneten Drehrichtung umläuft. An dem Bremsbackenträger 14 sind zwei diametral einander gegenüberliegende Bremsbacken 18 befestigt, die jeweils um einen Schwenkbolzen 20 drehbar gelagert sind. Die Bremsbacken 18 sind an ihrer zur Bremstrommel 12 weisenden Fläche jeweils mit einem Reibbelag 22 versehen, wobei diese Reibbeläge 22 während eines Abbremsvorgangs des Notbremssystems 10 mit der feststehenden Bremstrommel 12 in Eingriff kommen, so dass die Reibbeläge 22 und die Bremstrommel 12 eine Reibpaarung bilden. In dem in Fig. 1 dargestellten Zustand, in dem der Bremsvorgang noch nicht ausgelöst wurde, werden die Bremsbacken 18 mit Hilfe von Sperrbolzen 24 fest an dem Bremsbackenträger 14 gehalten, so dass sie sich nicht um die Schwenkbolzen 20 drehen können.

Diese Sperrbolzen 24 sind Teil einer Verriegelungseinrichtung 26, die ferner einen Magnet-Aktuator 28 aufweist, mit dem die Sperrbolzen 24 zwischen einer verriegelten Stellung, in der die Bremsbacken 18 an dem Bremsbackenträger 14 gehalten werden, und einer entriegelten Stellung verstellbar sind, in der die Bremsbacken 18 derart freigegeben werden, dass diese eine Schwenkbewegung um ihre Schwenkbolzen 20 in Richtung der Bremstrommel 12 ausführen, um den Bremseingriff zwischen den Reibbelägen 22 und der Bremstrommel 12 zu erzeugen. Wie es in Fig. 3 gezeigt ist, ist der Magnet-Aktuator 28 der Verriegelungseinrichtung 26 fest an der Abtriebswelle 16 befestigt. Alternativ kann der Magnet-Aktuator 28 auch an einem nicht dargestellten, ortfesten Gehäuseteil befestigt sein und berührungslos auf die Sperrbolzen 24 einwirken. Die Sperrbolzen 24, die durch den Magnet-Aktuator 28 vor- und zurückbewegbar sind, erstrecken sich durch in dem Bremsbackenträger 14 vorgesehene Durchgangsöffnungen 30 und greifen in dem in den Fig. 1, 3 und 5 dargestellten Zustand, in dem der Bremsvorgang noch nicht eingeleitet wurde, in Eingriffsöffnungen 32 ein, die jeweils in den Bremsbacken 18 vorgesehen sind. Auf diese Weise werden die Bremsbacken 18 an dem Bremsbackenträger 14 arretiert. Im Falle der Auslösung des Bremssystems zieht der Magnet-Aktuator 28 einen Ringanker, an welchem die Sperrbolzen 24 befestigt sind, um einen definierten Ausrückweg s aus dem Bremsbackenträger 14 und gibt somit die Bremsbacken 18 frei, siehe Fig. 4. Diese legen sich infolge der durch die umlaufende Abtriebswelle 16 erzeugten Fliehkräfte bzw. der Fliehbeschleunigung an die feststehende Bremstrommel 12 an, wodurch die zur Verzögerung der Abtriebswelle 16 erforderliche Reibpaarung zwischen den Reibbelägen 22 der Bremsbacken 18 und der Bremstrommel 12 gebildet wird. Auch wenn die Sperrbolzen 24 bei dem vorliegenden Ausführungsbeispiel mit Hilfe des Magnet-Aktators 28 vor- und zurückbewegt, sei darauf hingewiesen, dass die Sperrbolzen 24 alternativ auch unter der Wirkung einer Federkraft oder dergleichen in einer der beiden Bewegungsrichtungen bewegt werden können. So kann die Vorwärtsbewegung der Sperrbolzen 24 unter Einfluss des Magnet-Aktuators 28 erfolgen, während die Zurückstellung der Sperrbolzen 24 durch ein oder mehrere Federelemente erfolgt, oder umgekehrt.

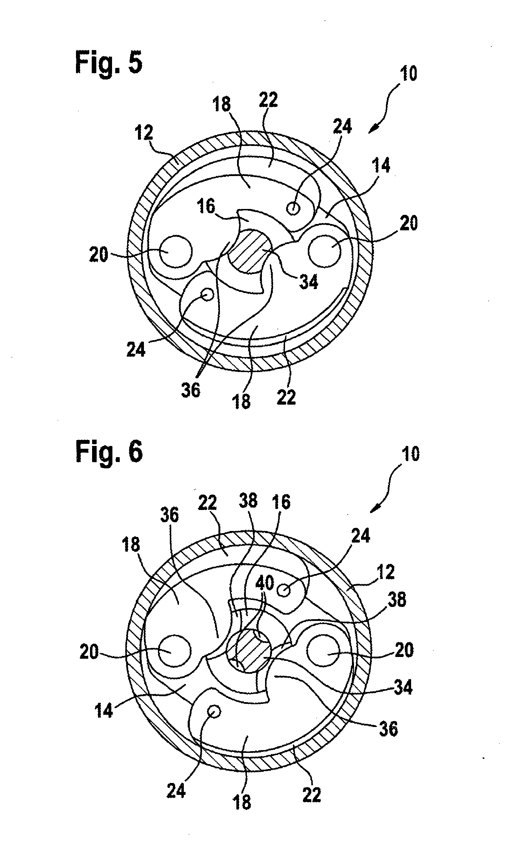

Wie es insbesondere aus den Fig. 3 und 4 hervorgeht, ist die mit Hilfe des Notbremssystems 10 abzubremsende Abtriebswelle 16 als Hohlwelle ausgebildet, in deren Hohlraum eine Antriebswelle 34 aufgenommen ist, die einen Teil des nicht näher dargestellten Antriebsstranges bildet. Um die Abtriebswelle 16 und die Antriebswelle 34 drehfest miteinander zu verbinden, sind an den Bremsbacken 18 in Richtung des Mittelpunktes der Abtriebswelle 16 und der Antriebswelle 34 vorstehende bogenförmige Vorsprünge 36 ausgebildet, die jeweils durch Durchgangsöffnungen 38, die in der Abtriebswelle 16 vorgesehen sind, hindurch greifen und in prismaförmige Aussparungen 40 der Antriebswelle 34 eingreifen, wie es in Fig. 5 dargestellt ist. Durch den Eingriff der an den Bremsbacken 18 vorgesehenen Vorsprünge 36 in die entsprechenden Aussparungen 40 der Antriebswelle 34 werden die Abtriebswelle 16 und die Antriebswelle 34 drehfest miteinander verbunden. Wird der Bremsvorgang ausgehend von dem in Fig. 5 dargestellten Zustand eingeleitet, so drehen sich die Bremsbacken 18, nachdem die Sperrbolzen 24 um den Ausrückweg s aus den Bremsbacken 18 gezogen wurden, um ihre jeweiligen Schwenkbolzen 20 in Richtung der Bremstrommel 12, so dass die an den Bremsbacken 18 angeordneten Vorsprünge 36 aus dem Eingriff mit den zugeordneten Aussparungen 40 der Antriebswelle 34 kommen, wodurch die Antriebswelle 34 von der Abtriebswelle 16 entkoppelt wird. Durch diese Entkopplung wird der Antriebsstrang nicht den während des Abbremsvorgangs erzeugten Verzögerungsmomenten ausgesetzt, so dass dieser nicht beschädigt werden kann. Zudem ist es möglich, die Komponenten des Antriebsstranges weniger robust auszuführen, da diese während des Abbremsvorgangs keinen großen Belastungen unterliegen. So kann beispielsweise der Querschnitt der motorseitigen Antriebswelle 34 kleiner als in demjenigen Fall ausgeführt werden, in dem keine Entkopplungseinrichtung zum Entkoppeln des Antriebstranges vorgesehen ist. Entscheidend ist jedoch der sich hieraus ergebende Vorteil, dass die Anzahl der zu verzögernden Komponenten auf ein Minimum reduziert wird. Dies wirkt sich während der Verzögerungsphase positiv auf die Systemlast aus, wie es zuvor bereits beschrieben wurde.

In Abhängigkeit der geometrischen Abmessungen der Konstruktion des Bremssystems definiert sich dessen Verstärkungsfaktor C*, wobei dieser für den vorliegenden Aufbau im Bereich der Selbstverstärkung oder der Selbsthemmung des Systems liegt. Für diesen Fall der Selbstverstärkung oder der Selbsthemmung des Systems wird nur ein kurzer Impuls zur Bildung der Reibpaarung benötigt, da die Bremsbacken 18 infolge des auftretenden Kräftegleichgewichts an die Bremstrommel 12 gepresst werden.

Nachfolgend soll eine Konstruktion, die diesen Verstärkungsfaktor realisieren kann, näher beleuchtet werden.

Aufgrund der kritischen Zeitvorgaben des genannten Bremssystems scheint es unter anderem zielführend, ein Konzept zu wählen, welches die Anwendung des technischen Prinzips der Selbsthilfe ermöglicht. Dies bedeutet, dass die zur Auslösung eingebrachte Spannkraft $F_{Sp}$ innerhalb des Systems um ein Vielfaches verstärkt wird, wobei die erzeugte Reaktionskraft $F_{Reakt}$, hier in Form einer Reibkraft $F_R$ wiederum zur Erhöhung der eingeleiteten Spannkraft $F_{Sp}$ beiträgt. Diese Eigenschaft wird auch Selbstverstärkung oder Servo-Wirkung genannt. Die hierdurch charakterisierten Systeme liefern prinzipiell die geringst möglichen Verzögerungszeiten unter Verwendung niedriger Spannkräfte, so dass sowohl die Masse der Auslöseglieder als auch die benötigte Auslösezeit $t_A$ minimiert werden können. Das Basismodell einer solchen Anordnung ist schematisch und zur Darstellung der Zusammenhänge in Abbildung 7 dargestellt.

Hierbei wird ein Reibklotz R auf einem mit konstanter Geschwindigkeit $v_x$ umlaufenden Band B aufgelegt. Ein schwenkbar gelagerter Stützstab S, welcher unter einem Anstellwinkel $\alpha$ bzgl. der Vertikalen gehalten wird, dient, die Position des Reibklotzes horizontal festzulegen und führt R gegenüber dem Gestell. Zwischen Klotz und Laufband herrscht im Betriebszustand Gleittreibung. Die Kräfte am freigeschnittenen Klotz gehen aus Abbildung 8 hervor. Es gelten folgende Bezeichnungen:

    FSP - Spannkraft
    FF - Federkraft Stützstab
    FN - Normalkraft
    FR - resultierende Reibkraft

Für das Kräftegleichgewicht gilt somit:

$$-F_F \cdot \sin\alpha + F_R = 0$$

$$-F_F \cdot \cos\alpha + F_N - F_{SP} = 0$$

$$F_R = F_N \cdot \mu$$

Daraus folgt als Zusammenhang für Reib- und Spannkraft:

$$F_{SP} = F_R \left( \frac{1}{\mu} - \frac{1}{\tan\alpha} \right)$$

Für einen Winkel $\alpha = 90°$ gilt, wie die Anschauung bestätigt, das Coulombsche Reibgesetz.

Der Verstärkungsfaktor definiert sich weiterhin wie folgt:

$$C^{\cdot} = \frac{F_R}{F_{SP}} = \frac{\mu \ \tan\alpha}{\tan\alpha - \mu}$$

Ist der Faktor C* positiv, so wirken die Kräfte in dem in der Skizze angenommenen Richtungssinn. Die Reibkraft $F_R$ ergibt sich hierbei aus der um den Faktor C* verstärkten Spannkraft $F_{SP}$. Für $\mu = \tan\alpha$ weist die Gleichung für C* eine Polstelle auf, so dass dieser Verstärkungsfaktor gegen Unendlich geht. In diesem Punkt herrscht praktisch der Systemzustand eines labilen Gleichgewichts. Für die Wahl der Parameter $\tan\alpha < \mu$ ergibt sich ein negativer Verstärkungsfaktor C*. Dies bedeutet eine theoretische Umkehr des Richtungssinns der Spannkraft $F_{SP}$, welche eintreten müsste, um das Kräftegleichgewicht aufrecht zu erhalten. In Realität kennzeichnet dieser Fall einen speziellen Zustand eines selbstverstärkenden Systems. Der Reibklotz wird hier durch die resultierende Reibkraft F zusätzlich an das Laufband gepresst. Aufgrund der somit entstehenden, stetigen, wechselseitigen Erhöhung der Reib- und Normalkräfte tritt im Idealfall nach kurzer Zeit Haftreibung innerhalb der Reibpaarung auf. Diese führt in Folge zur Blockierung des gesamten Systems. In diesem Zusammenhang wird gemeinhin von Selbsthemmung gesprochen. In vorteilhafter Weise treten dabei Kräfte auf, die größer sind, als die durch die Fliehkraft der Bremsbacken vermittelten Kräfte.

In Abhängigkeit von dem relativen Reibkoeffizienten $\mu$ der Reibpartner ergeben sich somit Winkel $\alpha$, die Bereiche bezeichnen, in denen Selbstverstärkung bzw. Selbsthemmung auftritt.

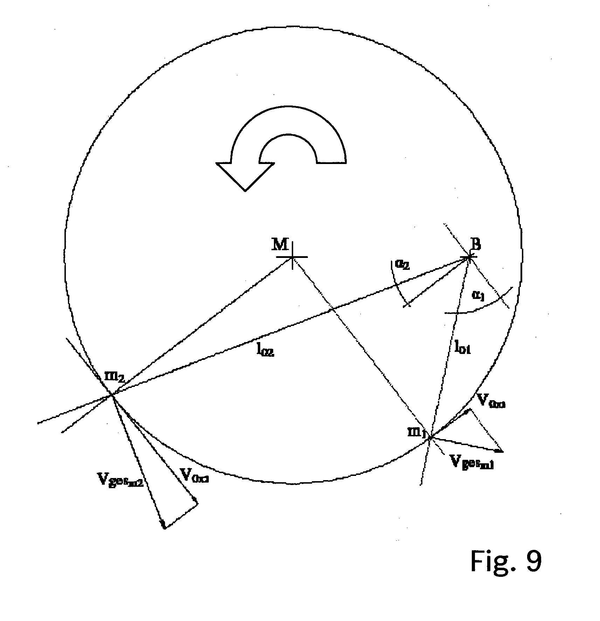

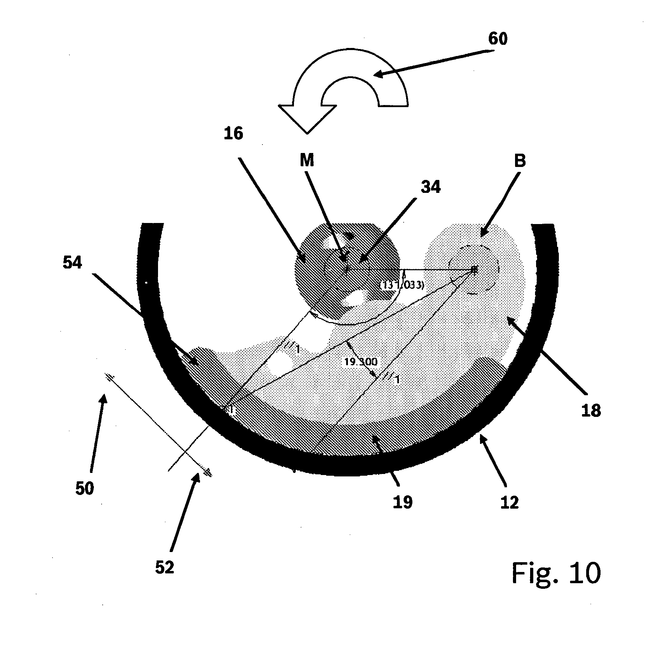

Die Konfiguration des Notbremssystems bzw. der aus der Geometrie des Systems resultierende Verstärkungsfaktor werden nunmehr anhand der Figuren 9 und 10 erläutert.

In Abbildung 9 ist die Ermittlung der Anlagegeschwindigkeit $v_{0x}$ der Bremsbeläge an der Bremstrommel qualitativ für zwei willkürlich gewählte Punkte $m_1$, $m_2$ am Trommelumfang durchgeführt. Diese stellen Massepunkte der Reibbeläge dar, welche um den Punkt B schwenkbar sind. Die Geschwindigkeitskomponente $v_{0x}$ orientiert sich hierbei immer rechtwinklig am Kreisbogen und vollzieht hierdurch Richtungsänderung tangential zur Trommel.

Die Winkel $\alpha_1$ und $\alpha_2$ sind für die jeweiligen Punkte $m_1$, $m_2$ angetragen, wobei die Änderung der Anstellung beider Massepunkte gegenüber Punkt B an einem gedachten Gehäuse sichtbar wird. Wie oben beschrieben, ist ein kleinerer Anstellwinkel $\alpha_2$ günstiger, um eine hohe Selbstverstärkung oder gar Selbsthemmung bei einem bestimmten Reibwert $\mu$ zu erreichen. Aus diesem Grund wird der Punkt $m_2$ einen stets höheren Einfluss auf den Verstärkungsfaktor C* des Gesamtsystems besitzen, falls das Auslegungsziel Selbsthemmung ist. In diesem Fall ergibt sich ein selbsthemmender Bereich am vorderen Ende der Bremsbacke 18 bzw. des Reibbelags 19 dieser Bremsbacken.

Ein Überblick zu den Reibverhältnissen innerhalb des Bremssystems gibt Abbildung 10. Es sei angenommen, dass der hier gewählte Winkel $\alpha = 19{,}3°$ den Punkt des labilen Gleichgewichts $C* = \pm\infty$ darstellt, so entspricht dies einen Reibwert $\mu = 0{,}35$ der Reibpaarung, welcher mindestens vorhanden sein muss, um in Richtung des Pfeils 50 eine selbsthemmende Zone des Reibbelages auszubilden. In Richtung des Pfeils 52 ist die Reibpaarung selbstverstärkend.

Es könnte hierbei vorteilhaft sein, den Reibbelag zumindest eines Reib- bzw. Bremspartners inhomogen zu gestalten. So wäre es möglich, die Vergrößerung des Winkels $\alpha$ in Richtung des 54 dadurch zu kompensieren, dass der relative Reibungskoeffizient $\mu$ der Reibpartner in dieser Richtung ansteigen würde, was sich beispielsweise durch einen inhomogenen Reibbelag auf der Bremsbacke realisieren lassen könnte.

Aufgrund des zuvor beschriebenen Aufbaus des Notbremssystems 10 kann das Zeitintervall für die Auslösezeit des Bremsvorgangs stark verkürzt werden, da der Bremseingriff zwischen der Bremstrommel 12 und den Bremsbacken 18 unter dem Einfluss der Fliehkraft bzw. Fliehbeschleunigung erfolgt, welche aus der Rotation der Abtriebswelle 16 resultiert. Darüber hinaus kommt es zu einer selbstverstärkenden und sogar selbsthemmenden Wirkung der Abbremsung, so dass das die Bremswirkung erhöht und die Bremszeiten vorteilhaft verkürzt werden können.

Aufgrund der Verwendung eines zweiseitigen Angriffes der Reibumfangskraft der Reibpaarung werden die vorliegenden eingesetzten Wälzlagerungen geschont und müssen aufgrund von Belangen der Dauerhaltbarkeit des Gesamtsystems nicht überarbeitet oder gar neu konzipiert werden, wodurch wiederum eine erhöhte Massenträgheit ins System eingebracht würde.

Durch einen Aufbau, wie er vorliegend beschrieben wurde, werden zudem umlaufende Außengeometrien der Bremseinheit vermieden, wodurch ein leicht zu kapselndes, geschlossenes System mit kompaktem Aufbau realisiert werden kann, welches sich zusätzlich positiv in die speziellen Belange des Arbeitsschutzes im Umgang mit Werkzeugmaschinen eingliedert.

Es sollte klar sein, dass die Betätigung des Magnet-Aktuators 28 durch Ausgangssignale entsprechender Sensoren erfolgt, die einen Zustand erfassen, in dem ein Bediener gefährlich nahe an das Sägeblatt der Tischkreissäge kommt oder dieses berührt wird. Derartige Sensoren sind im Stand der Technik bekannt, deshalb auf diese in der vorliegenden Beschreibung nicht näher eingegangen wurde.

Auch wenn bei der zuvor beschriebenen Ausführungsform eine Kreissäge als Beispiel einer Werkzeugmaschine gewählt wurde, sollte klar sein, dass das Prinzip der vorliegenden Erfindung auch auf andere Werkzeugmaschinen anwendbar ist.

Schließlich sollte klar sein, dass die zuvor beschriebene Ausführungsform des Notbremssystems in keiner Weise einschränkend ist. Vielmehr sind Modifikationen und Änderungen möglich, ohne den Schutzbereich der vorliegenden Erfindung zu verlassen, der durch die beiliegenden Ansprüche definiert ist.

**Patentansprüche**

1. Werkzeugmaschine mit einem Notbremssystem (10) zum abrupten Abbremsen einer das Werkzeug der Werkzeugmaschine direkt oder indirekt antreibenden Welle (16) in Zeiten von 1 bis 50 ms, das Notbremssystem aufweisend zumindest eine Bremstrommel (12) und zumindest eine Bremsbacke (18), die zum Abbremsen der Welle (16), miteinander in Eingriff gebracht werden, **dadurch gekennzeichnet, dass** der Bremseingriff zwischen der Bremstrommel (12) und der Bremsbacke (18) unter dem Einfluss einer aus der Rotation der Welle (16) resultierenden Fliehkraft erfolgt, wobei die Bremstrommel (12) und die zumindest eine Bremsbacke (18) derart ausgebildet und/oder angeordnet sind, dass das Bremssystem selbstverstärkend, insbesondere selbsthemmend ist.

2. Werkzeugmaschine nach einem der vorhergehenden Ansprüche, **dadurch gekennzeichnet, dass** die zumindest eine Bremsbacke (18) schwenkbar an einem Bremsbackenträger (14) befestigt ist, der an der Welle (16) angeordnet ist und mit dieser umläuft.

3. Werkzeugmaschine nach einem der vorhergehenden Ansprüche, **dadurch gekennzeichnet, dass** eine Verriegelungseinrichtung (26) vorgesehen ist, die zwischen einer verriegelten Stellung, in der die Bremsbacke (18) an dem Bremsbackenträger (14) gehalten wird, und einer entriegelten Stellung verstellbar, in der die zumindest eine Bremsbacke (18) derart freigegeben wird, dass diese eine Schwenkbewegung in Richtung der Bremstrommel (12) ausführt, um den Bremseingriff zu erzeugen.

4. Werkzeugmaschine nach Anspruch 3, **dadurch gekennzeichnet, dass** die Verriegelungseinrichtung (26) zumindest ein Sperrelement (24) aufweist, dass zwischen einer verriegelten Stellung, in der es mit der zumindest einen Bremsbacke (18) in Eingriff ist, und einer entriegelten Stellung bewegbar ist, in der es von der Bremsbacke (18) entkoppelt ist.

5. Werkzeugmaschine nach Anspruch 3 oder 4, **dadurch gekennzeichnet, dass** die Verriegelungseinrichtung (26) einen Aktuator (28) aufweist, der die Verriegelungseinrichtung (26) aus der verriegelten Stellung in die entriegelte Stellung überführt.

6. Werkzeugmaschine nach einem der vorhergehenden Ansprüche, **dadurch gekennzeichnet, dass** diese eine Kopplungseinrichtung aufweist, die derart beschaffen ist, dass sie in ihrer gekoppelten Stellung die abzubremsende Welle (16) mit einem Antriebsstrang verbindet, und dass sie während einer Notbremsung automatisch in ihre entkoppelte Stellung überführt wird, in der die abzubremsenden Abtriebswelle (16) von dem Antriebsstrang entkoppelt ist.

7. Werkzeugmaschine nach einem der vorhergehenden Ansprüche, **dadurch gekennzeichnet, dass** diese eine Rückstelleinrichtung zum Zurückbewegen der zumindest einen Bremsbacke (18) in ihre Ausgangslage aufweist.

8. Werkzeugmaschine nach Anspruchs 7, **dadurch gekennzeichnet, dass** die Rückstelleinrichtung Zug- und/oder Druckfederelemente aufweist.

9. Werkzeugmaschine nach Anspruch 8, **dadurch gekennzeichnet, dass** die Werkzeugmaschine eine Säge, vorzugsweise eine Kreissäge und insbesondere eine Tischkreissäge ist.

**Claims**

1. Machine tool having an emergency braking system (10) for abruptly braking, in times of 1 to 50 ms, a rotating shaft (16) which drives the tool of the machine tool directly or indirectly, the emergency braking system having at least one brake drum (12) and at least one brake shoe (18) which can be brought into engagement with one another for braking the shaft (16), **characterized in that** the braking engagement between the brake drum (12) and the brake shoe (18) is effected under the effect of a centrifugal force resulting from the rotation of the shaft (16), wherein the brake drum (12) and the at least one brake shoe (18) are designed and/or arranged in such a way that the braking system is self-energizing, in particular self locking.

2. Machine tool according to Claim 1, **characterized in that** the at least one brake shoe (18) is pivotably fastened to a brake shoe carrier (14) which is arranged on the shaft (16) and revolves with the latter.

3. Machine tool according to one of the preceding claims, **characterized in that** a locking device (26) is provided which can be adjusted between a locked position in which the brake shoe (18) is held on the brake shoe carrier (14) and an unlocked position in which the at least one brake shoe (18) is released in such a way that said brake shoe (18) performs a pivoting movement in the direction of the brake drum (12) in order to produce the braking engagement.

**4.** Machine tool according to Claim 3, **characterized in that** the locking device (26) has at least one locking element (24) which is movable between a locked position in which it is in engagement with the at least one brake shoe (18) and an unlocked position in which it is uncoupled from the brake shoe (18).

**5.** Machine tool according to Claim 3 or 4, **characterized in that** the locking device (26) has an actuator (28) which shifts the locking device (26) from the locked position into the unlocked position.

**6.** Machine tool according to one of the preceding claims, **characterized in that** said emergency braking system (10) has a coupling arrangement which is designed in such a way that, in the coupled position thereof, it connects the shaft (16) to be braked to a drive train and that, during emergency braking, it is shifted automatically into the uncoupled position thereof, in which the output shaft (16) to be braked is uncoupled from the drive train.

**7.** Machine tool according to one of the preceding claims, **characterized in that** said emergency braking system (10) has a resetting device for moving the at least one brake shoe (18) back into its initial position.

**8.** Machine tool according to Claim 7, **characterized in that** the resetting device has tension and/or compression spring elements.

**9.** Machine tool according to Claim 8, **characterized in that** the machine tool is a saw, preferably a circular saw and in particular a circular saw bench.

**Revendications**

**1.** Machine-outil avec un système de frein d'urgence (10) pour le freinage soudain d'un arbre entraînant directement ou indirectement l'outil de la machine-outil en des temps de 1 à 50 ms (16), que le système de frein soit auto-renforçant, notamment auto-bloquant un tambour de frein (12) et au moins une mâchoire de frein (18), qui sont amenés en prise l'un avec l'autre pour freiner l'arbre (16), **caractérise en ce que** l'engagement de freinage entre le tambour de frein (12) et la mâchoire de frein (18) a lieu sous l'influence d'une force centrifuge résultant de la rotation de l'arbre (16), le tambour de frein (12) et l'au moins une mâchoire de frein (18) étant réalisés et disposés de telle sorte/ou que le système de frein soit auto-renforçant, notamment auto-bloquant.

**2.** Machine-outil selon la revendication 1, **caractérisé en ce que** l'au moins une mâchoire de frein (18) est fixée de manière à pouvoir pivoter sur un support de mâchoire de frein (14) qui est disposé sur l'arbre (16) et qui tourne avec lui.

**3.** Machine-outil selon l'une quelconque des revendications précédentes, caractérisée la ce qu'un dispositif de verrouillage (26) est prévu, lequel est déplaçable entre une position verrouillée dans laquelle la mâchoire de frein (18) est maintenue sur le support de mâchoire de frein (14) et une position déverrouillée, dans laquelle l'au moins une mâchoire de frein (18) est libérée de telle sorte qu'elle effectue un mouvement de pivotement dans la direction du tambour de frein (12) afin de produire l'engagement de freinage.

**4.** Machine-outil selon la revendication 3, **caractérisée en ce que** le dispositif de verrouillage (26) présente au moins un élément de blocage (24) qui peut être déplacé entre une position verrouillée dans laquelle il est en prise avec l'au moins une mâchoire de frein (18) et une position déverrouillée dans laquelle il est désaccouplé de la mâchoire de frein (18).

**5.** Machine-outil selon la revendication 3 ou 4, **caractérisée en ce que** le dispositif de verrouillage (26) présente un actionneur (28) qui fait passer le dispositif de verrouillage (26) de la position verrouillée dans la position déverrouillée.

**6.** Machine-outil selon l'une quelconque des revendications précédentes, **caractérisée en ce qu'elle** présente un dispositif d'accouplement qui est créé de telle sorte qu'il relie, dans sa position accouplée, l'arbre à freiner (16) à une chaîne cinématique, et **en ce que**, dans le cas d'un freinage d'urgence, il est transféré automatiquement dans sa position désaccouplée dans laquelle l'arbre de prise de force à freiner (16) est désaccouplé de la chaîne cinématique.

**7.** Machine-outil selon l'une quelconque des revendications précédentes, **caractérisée en ce qu'elle** présente un dispositif de rappel pour ramener l'au moins une mâchoire de frein (18) dans sa position de départ.

**8.** Machine-outil selon la revendication 7, **caractérisée en ce que** le dispositif de rappel présente des éléments de ressort de traction et/ou de pression.

**9.** Machine-outil selon la revendication 8, **caractérisée en ce que** la machine-outil est une scie, de préférence une scie circulaire et en particulier une scie circulaire à table.

**Fig. 1**

**Fig. 2**

**Fig. 3**

**Fig. 4**

## Fig. 5

## Fig. 6

Fig. 7

Fig. 8

Fig. 9

Fig. 10

Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19536995 A1